# EUROPEAN PATENT SPECIFICATION

(11) **EP 3 208 136 B1**
(45) Date of publication and mention of the grant of the patent: **22.12.2021**
(21) Application number: 17151159.5
(22) Date of filing: 12.01.2017
(51) Int. Cl.: E01C 5/18, E02D 27/01, E01C 5/22, B60L 53/30

(54) **A CHARGING STATION FOR RECHARGING ELECTRICAL VEHICLES**
LADESTATION ZUM AUFLADEN VON ELEKTRISCHEN FAHRZEUGEN
STATION DE CHARGE PERMETTANT DE RECHARGER DES VÉHICULES ÉLECTRIQUES

(30) Priority: 17.02.2016 NO 20160276
(43) Date of publication of application: 23.08.2017
(73) Proprietor: NORFAX, 2007 Kjeller (NO)
(72) Inventor: TVETEN, Per Ketil, 1920 Sørumsand (NO)
(74) Representative: Acapo AS

(56) References cited:
- DE-A1- 3 520 305
- DE-C- 576 764
- US-A1- 2005 257 470
- US-A1- 2010 325 977
- US-A1- 2013 049 689

## Description

### Field of the invention

The present invention relates to a charging station for charging or recharging electrical batteries for electrical vehicles, comprising an electric source, a charging unit supported by a base structure or a ground, the charging unit being provided with devices configured for supplying electricity to a battery of a vehicle.

### Background of the Invention

As the number of electrical vehicles or hybrid-vehicles is increasing, there is a need for electrical vehicle (EV) charging stations, electric recharging points, or charging points. Such units are provided with electrical Vehicle Supply Equipment (EVSE). Such units may be a part of an element in the infrastructure that supplies electric energy for the recharging of electric vehicles, the unit being provided with plug-in equipment.

An electric vehicle charging station, also called EV charging station, electric recharging point, charging point, charge point and EVSE (Electric Vehicle Supply Equipment), is an element in an infrastructure that supplies electric energy for the recharging of electric vehicles, including electric cars, neighbourhood electric vehicles and plug-in hybrids.

As plug-in hybrid electric vehicles and battery electric vehicle ownership is expanding, there is a growing need for widely distributed publicly accessible charging stations, some of which support faster charging at higher voltages and currents than are available from residential EVSEs. Many charging stations are on-street facilities provided by electric utility companies located or located at shopping centres and operated by many private companies.

Charging stations fall into four basic contexts:
- Residential charging stations: An EV owner plugs in when he or she returns home, and the car recharges overnight. A home charging station usually has no user authentication, no metering, and may require wiring a dedicated circuit. Some portable chargers can also be wall mounted as charging stations.
- Charging while parked (including public charging stations) - a commercial venture for a fee or free, offered in partnership with the owners of the parking lot. This charging may be slow or high speed and encourages EV owners to recharge their cars while they take advantage of nearby facilities. It can include parking stations, parking at malls, small centres, and train stations (or for a business's own employees).
- Fast charging at public charging stations >40 kW, delivering over 60 miles (100 km) of range in 10-30 minutes. These chargers may be at rest stops to allow for longer distance trips. They may also be used regularly by commuters in metropolitan areas, and for charging while parked for shorter or longer periods.
- Battery swaps or charges in under 15 minutes. A specified target for CARB credits for a zero-emission vehicle is adding 200 miles to its range less than 15 minutes.

Battery capacity and the capability of handling faster charging are both increasing, and methods of charging have needed to change and improve. Superchargers are free connectors that charge batteries in minutes instead of hours. Stations are strategically placed to minimize stops during long distance travel and are conveniently located near restaurants, shopping centres, and WIFI hot spots.

In order to speed up the charging or re-charging effect and thus reducing down-time due to such charging or re-charging, the systems and facilities used are continuously improved, allowing a battery to for example an 80% charge in 30 minutes or less, for example with a charging rate of more the 90 kW. In order to cater for higher charges, there will be a demand for more robust cables, transporting away the heat caused by such volumes of energy over a short time span. Hence, development of liquid cooled charging cables is in progress, enabling handling of such high powered energy without causing detrimental effect or harm to persons handling and disconnecting such cables.

Commonly, the charging or recharging stations are provided with charging units, such units being provided with one or more electrical cables, fixed at one end to the charging unit, while the opposite end is provided with a plug for connection to a corresponding plug in the vehicle. Such system corresponds to a pump at a petrol station and the filling hoses and end valve. While one end of the cable is formed as an integrated part of the charging unit, the free end of such cable is provided with a relatively heavy plug of a more or less fragile material, while the cable as such is a heavy duty cable, in itself being relatively stiff and thus difficult to handle. For connecting to the charging or re-charging station cables the end plug for connection from the charging points in a charging unit is connected to the vehicle, the end connection being made of a plastic material with an inherent rigidity, partly fragile and vulnerable to damage and breakage in case of impact with hard and rigid surfaces. Hence care should be taken during plug-in or disconnecting the cable, so as to avoid the cable from dropping down onto the slab or hard ground, thus avoiding breakage or failure in the plug.

From EP 2572923 A2 it is known a charging station comprising a device preventing the charging cable from being damaged due to detrimental contact with the ground or preventing the charging cable from causing damage to the vehicle.

US 2008/185991 A1 discloses a device for preventing damage to the end of the charging cable and its end plug if it accidentally should be dropped to the floor. The device is provided as a part of a ball and is fabricated from rubber. The ball provides a dampening effect if it comes in contact with the floor and damage is prevented.

US 2011/148597 A1 discloses a device integrated with the plug configured to prevent damage of the plug if it should drop down on the floor. The device comprises a shock absorbing cushion arranged inside the plug.

From WO 2012/148597 A1 it is known to arrange shock absorbing elements on the charging cable in order to protect the cable and its plug in case the charging cable by accident should drop down and hit the floor.

JP 2012/44873 A discloses a charging station provided with a device for handling a charging cable and preventing it from dropping onto the ground.

US 2013/221917 A1 discloses a device for protecting the charging station from damage caused by collision with a vehicle in the process of parking. The device is made of an energy absorbing material fixed to the charging station.

From DK 9399456 U it is known to use elastic tiles for example on playgrounds, preventing injury to playing children. The tiles are made of a composite material made up of two different rubber materials, the lower one being made up of rubber from discarded wheel tyres.

EP 2860833 A2 discloses a base for a charging station provided with ducts for electric cables.

US 2013/049689 A1 discloses a charging system detachably drawing from a power source comprising an electrical output configuration, an electrical input configuration, and an energy store configuration.

US 2005/257470 A1 discloses a paving block with a rubber piece made from, e.g., a used tire, for reducing echoes, noise, wear, icing on the block surface, adhering force of ice, shocks in collisions, etc.

Hence there is a need for an environment around such the public charging station where the risk pf causing injury to the personnel and damage to the gear used is eliminated, or at least substantially reduced.

### Summary of the Invention

An object of the present invention is to improve the safety associated with the stage of charging the batteries of an electrical vehicle.

Another object of the present invention is to eliminate the possibilities of injury to personnel as a consequence of defect equipment used for charging the batteries of an electrical vehicle.

Yet another object of the present invention is to provide a charging station where the possibilities for causing damage to the equipment used for charging the batteries of an electrical vehicle is eliminated, or at least substantially reduced.

The objects are achieved by a charging station as defined by the independent claim, while variants or alternative embodiments are defined by the dependent claims.

According to the invention a charging station for charging or recharging electrical batteries for electrical vehicles is provided. The charging station comprises an electric source, a charging unit, and a base structure, the charging unit being supported by the base structure, the charging unit being provided with a cable, the end of which being provided with an end plug configured to be connected to a connector on the vehicle or with at least one plug-in point for plugging in an end to a charging cable from the vehicle. The base structure is along the side of the charging unit, facing the parked cars, provided with the charging point, provided with a resilient surface of a material having shock absorbing properties, so as to reduce the possibility of causing damage to the plug intended to be plugged into the plug unit on the vehicle and/or the charging unit or disconnected from the vehicle and/or charging unit, if the plug during such stage is dropped down. The resilient surface comprises rubberized asphalt concrete, rubber mats, or plastic material embedded into concrete.

At least the resilient surface may be made of a rubberized asphalt concrete, consisting of regular asphalt concrete mixed with crumb rubber, made for example from recycled tyres. Alternatively, the resilient surface is made of a mat or a plate of a resilient material, for example glued to the concrete surface or fixed to the concrete by means of a roughened surface or by means of downwards projecting fins, protrusions or ribs embedded in the concrete during casting. The resilient surface may be integrated with the concrete slab.

Alternatively, or in addition, the resilient surface facing upwards when positioned on the slab is provided with resilient floss or a large number of upwards projecting finger like means, contributing to the resilience.

Since the surface around the charging unit is made of a resilient material and/or given a shape and surface configuration that is resilient, the risk for causing damage to the fragile end plug of a connector between the vehicle and the charging unit is eliminated or at least substantially decreased. As a consequence, the risk of giving a person handling the connector an electric high energy shock is eliminated or at least substantially reduced correspondingly. Moreover, the risk for a causing an unintentional stop due to a defect plug and malfunctioning charging or re-charging is correspondingly eliminated or at least reduced.

### Short Description of the Drawings

Embodiments of the present invention will now be described in more detail, referring to the drawings, by way of example only, with reference to the following diagrams wherein:
Figure 1 shows schematically in perspective a view of an embodiment of a fast public charging station;
Figure 2 shows schematically in perspective a view of the base structure for the fast public charging station disclosed in Figure 1;
Figure 3 shows schematically a horizontal view of an embodiment of a base structure for a fast public charging station of the type disclosed in Figure 1; and
Figure 4 shows schematically a section through the base structure shown in Figure 2 and 3, indicating one possible embodiment of the ducts for supply lines for supply of electricity etc.

### Detailed Description of an Embodiments of the Invention

The following description of the exemplary embodiment refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to a method for welding a chair to a lining or to insulation, creating a proper and adequate fixing of the chair to the supporting surface.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

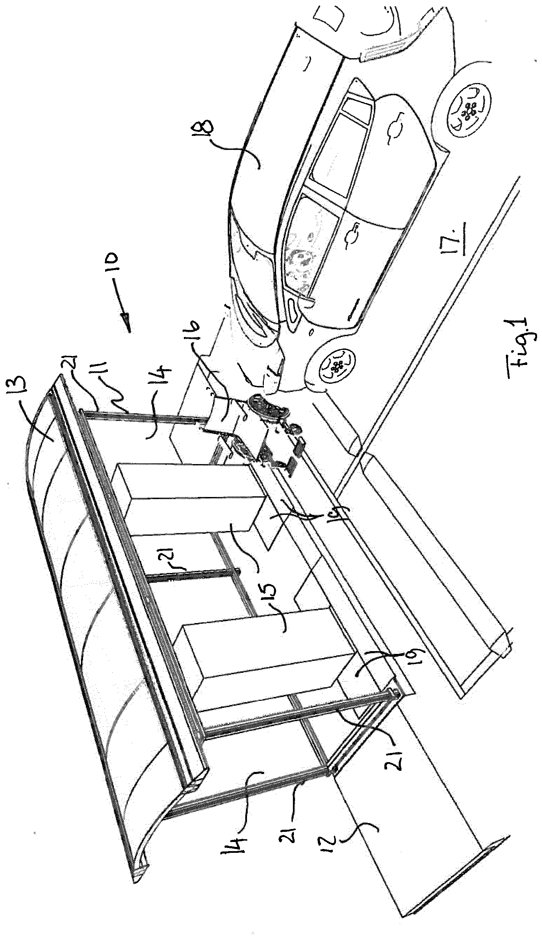

Figure 1 shows schematically in perspective a view of an embodiment of a fast public charging station 10. The station shown comprises a protective shed 11 resting on a base structure 12. The base structure 12 as such is preferably made of concrete, preferably with a anti-slippery surface. The protective shed 11 comprises a roof structure 13, and vertical walls 14 arranged on three sides of the shed 11. Access to the shed 11 is from the front side. On the base structure 12, beneath the roof 13, two charging racks 15 with female connectors (not shown) for connection with a male plug are arranged. The space in front of the station may be configured to allow easy access for wheel chairs 16. Moreover, the station 10 may be configured with parking lanes 17, each positioned in front of the charging rack 15. As indicated, a vehicle 18 may be parked in the parking lane 17 in front of one of the charging racks 15. On both sides and in front of each of charging units 15, the base structure 12 is provided with a resilient surface 19, having resilient properties, so that damage to the male plug on a charging cable to the vehicle is avoided in case such plug unintentionally should drop on to the base structure 12. The charging units 15 may be of the supercharging type with a multiple charging points.

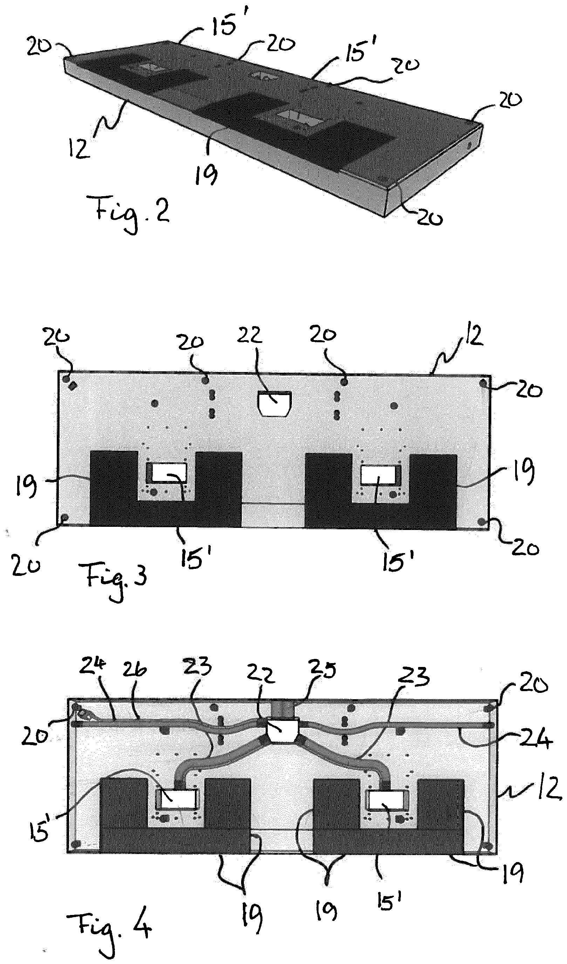

Figure 2 shows schematically in perspective a possible configuration of an embodiment of base structure 12, suitable for use in connection with a fast public charging station 10 of the type disclosed in Figure 1, while Figure 3 shows schematically a horizontal view of the embodiment of a base structure 12 shown in Figure 2. As shown the station 10 is provided with two foundation recesses 15' for the charging units 15. The charging units 15 may include a number of conventional, purpose built charging points (not shown) for connection a charging cables (not shown) to the charging unit 15. At each corner and along the back side the base structure 12 is provided with holes or embedded elements 20 for fixing the supporting structure 21 of the protective shed 11 to the base structure 12. Moreover, the base structure 12 may also be provided with a recess 22 forming a well for the infra structure. As shown in the Figures, the surface of the base structure 12 surrounding foundation recesses 15' and the charging units 15 at least along three sides, is provided with a resilient surface 19, made of a material both being resilient and having shock absorbing properties. Such surfaces 19 may for example be made of rubberized asphalt concrete, consisting of regular asphalt concrete mixed with crumb rubber, made for example from recycled tyres, and made integrated with the concrete slab 12. Alternatively, the surfaces 19 may be made from rubber mats or resilient plastic materials, embedded in and fixed to the concrete, for example during the casting operation of the base slab 12.

Figure 4 shows schematically a section through the base structure shown in Figure 2, where the ducts 23,24,25 for various lines for supply of electricity etc. is shown. As indicated in Figure 4, a duct 25 for a supply line extends through the slab 12 from the exterior infrastructure (not shown) to the well 22. From the well ducts 23 extend to the foundation recesses 15', while separate ducts 24 extend from the well 22 to the corner area of the slab 12, in the vicinity of the embedment devices for the corner supporting structures 20. A duct 26 may also be provided for a line for supplying electricity to a lighting system (not shown) in the shed.

As indicated in Figure 1, the shed is of a simple weather proof type. It should be appreciated that the shed may be substituted by a more closed, dry and warm housing type with external with a number of charging points while the interior is suitable for longer stays under warm and dry conditions.

In case the resilient device 19 is made of a mat type of device, the surface of the resilient device 19 intended to be in contact with the concrete surface of the slab 12 may be glued on to the surface,. Alternatively, the surface of the mat 19 intended to face towards the concrete surface may be provided with a surface providing adhesion to the concrete, such as for example fins a roughened surface or downwards protruding elements of a suitable type. Recesses may be arranged in the concrete surface so as to establish a flush joint between the upper surface of the mat 19 and the concrete surrounding the mat 19.

Although the charging unit described is of a type with a heavy duty cable fixed at one end to the charging end, while the opposite, free end is provided with a plug to be connected with a corresponding plug on the vehicle, it should be appreciated that the invention also relate to a charging system where a cable with plugs at each end is used, one end being connected to the charging unit while the opposite end is plugged to the vehicle.

## Claims

1. A charging station (10) for charging or recharging electrical batteries for electrical vehicles (18), comprising an electric source, a charging unit (15), and a base structure (12), the charging unit (15) being supported by the base structure (12), the charging unit (15) being provided with a cable, the end of which being provided with an end plug configured to be connected to a connector on the vehicle (18) and/or with at least one plug-in point for plugging in an end of a charging cable from the vehicle (18),
***characterized in that*** the base structure (12) along the side of the charging unit (15) provided with the charging point, is provided with a resilient surface (19) of a material having shock absorbing properties, said resilient surface (19) comprising rubberized asphalt concrete, rubber mats, or plastic material embedded into concrete.

2. Charging station (10) according to claim 1, wherein at least the resilient material is made of a rubberized asphalt concrete, consisting of regular asphalt concrete mixed with crumb rubber, made for example from recycled tyres.

3. Charging station (10) according to claim 1, wherein the resilient surface (19) is made of a mat or a plate of a resilient material.

4. Charging station (10) according to one of the claims 1 to 3, wherein the resilient surface (19) is integrated with the base structure (12).

5. Charging station (10) according to claim 3 or 4, wherein the mat or the plate is glued to a concrete surface.

6. Charging station (10) according to claim 5, wherein the mat or the plate is fixed to the concrete surface by means of a roughened surface or by means of downwards projecting fins, protrusions or ribs embedded in the concrete surface during casting.

7. Charging station (10) according to any one of the claims 1 to 6, wherein the resilient surface (19) facing upwards when positioned on the base structure (12) is provided with resilient floss or a large number of upwards projecting finger like means, contributing to the resilience.

## Patentansprüche

1. Ladestation (10) zum Laden oder Wiederaufladen elektrischer Batterien für Elektrofahrzeuge (18), die eine Stromquelle, eine Ladeeinheit (15) und eine Basisstruktur (12) umfasst, wobei die Ladeeinheit (15) durch die Basisstruktur (12) getragen wird, wobei die Ladeeinheit (15) mit einem Kabel versehen ist, dessen Ende mit einem Endstecker versehen ist, der dafür konfiguriert ist, mit einem Verbinder an dem Fahrzeug (18) und/oder mit mindestens einem Einsteckpunkt zum Einstecken eines Endes eines Ladekabels von dem Fahrzeug (18) verbunden zu werden,
**dadurch gekennzeichnet, dass** die Basisstruktur (12) entlang der Seite der Ladeeinheit (15), die mit dem Ladepunkt versehen ist, mit einer elastischen Oberfläche (19) aus einem Material, das stoßabsorbierende Eigenschaften aufweist, versehen ist, wobei die elastische Oberfläche (19) in Beton eingebetteten gummierten Asphaltbeton, in Beton eingebettete Gummimatten oder in Beton eingebettetes Kunststoffmaterial umfasst.

2. Ladestation (10) nach Anspruch 1, wobei mindestens das elastische Material aus gummiertem Asphaltbeton hergestellt ist, der aus normalem Asphaltbeton, gemischt mit Gummigranulat, das zum Beispiel aus wieder aufbereiteten Reifen hergestellt ist, besteht.

3. Ladestation (10) nach Anspruch 1, wobei die elastische Oberfläche (19) aus einer Matte oder einer Platte aus einem elastischen Material hergestellt ist.

4. Ladestation (10) nach einem der Ansprüche 1 bis 3, wobei die elastische Oberfläche (19) in der Basisstruktur (12) integriert ist.

5. Ladestation (10) nach Anspruch 3 oder 4, wobei die Matte oder die Platte an eine Betonfläche geklebt ist.

6. Ladestation (10) nach Anspruch 5, wobei die Matte oder die Platte mit Hilfe einer aufgerauten Oberfläche oder mit Hilfe nach unten vorspringender Grate, Vorsprünge oder Rippen, die während des Gießens in die Betonfläche eingebettet sind, an der Betonfläche befestigt ist.

7. Ladestation (10) nach einem der Ansprüche 1 bis 6, wobei die elastische Oberfläche (19), die nach oben zeigt, wenn sie auf der Basisstruktur (12) angeordnet ist, mit elastischen Seidenfasem oder einer großen Anzahl von nach oben vorspringenden fingerartigen Mitteln versehen ist, was zu der Elastizität beiträgt.

## Revendications

1. Borne de recharge (10) pour charger ou recharger des batteries électriques pour des véhicules électriques (18), comprenant une source électrique, une unité de charge (15) et une structure de base (12), l'unité de charge (15) étant supportée par le structure de base (12), l'unité de charge (15) étant équipée d'un câble, dont l'extrémité est équipée d'une fiche d'extrémité configurée pour être connectée à un connecteur sur le véhicule (18) et/ou à au moins un point d'enfichage pour enficher une extrémité d'un câble de charge du véhicule (18) ;
**caractérisée en ce que** la structure de base (12), le long du côté de l'unité de charge (15) équipée du point de charge, est équipée d'une surface élastique (19) composée d'un matériau présentant des propriétés d'absorption des chocs, ladite surface élastique (19) comprenant du béton bitumineux caoutchouté, des tapis en caoutchouc ou un matériau plastique noyés dans le béton.

2. Borne de recharge (10) selon la revendication 1, dans laquelle au moins le matériau élastique est fabriqué à partir de béton bitumineux caoutchouté, composé de béton bitumineux ordinaire mélangé avec des granules de caoutchouc, fabriqué par exemple à partir de bandages pneumatiques recyclés.

3. Borne de recharge (10) selon la revendication 1, dans laquelle la surface élastique (19) est composée d'un tapis ou d'une plaque de matériau élastique.

4. Borne de recharge (10) selon l'une des revendications 1 à 3, dans laquelle la surface élastique (19) est intégrée à la structure de base (12).

5. Borne de recharge (10) selon les revendications 3 ou 4, dans laquelle le tapis ou la plaque est collé sur une surface de béton.

6. Borne de recharge (10) selon la revendication 5, dans laquelle le tapis ou la plaque est fixé sur la surface de béton par l'intermédiaire d'une surface rendue rugueuse ou par l'intermédiaire d'ailettes, de saillies ou de nervures s'étendant vers le bas noyées dans la surface de béton au cours de la coulée.

7. Borne de recharge (10) selon l'une quelconque des revendications 1 à 6, dans laquelle la surface élastique (19), orientée vers le haut lors de son positionnement sur la structure de base (12), est équipée de fils de bourre de soie élastiques ou d'un grand nombre de moyens en forme de doigts saillant vers le haut, contribuant à l'élasticité.
